# EUROPÄISCHE PATENTSCHRIFT

(11) **EP 0 796 765 B1**
(45) Veröffentlichungstag und Bekanntmachung des Hinweises auf die Patenterteilung: **30.07.2003**
(21) Anmeldenummer: 97102081.3
(22) Anmeldetag: 10.02.1997
(51) Int. Cl.: B60R 16/02

(54) **Verfahren zum Verändern einstellbarer Funktionen eines Fahrzeugs**
Procedure for changing adjustable functions in a vehicle
Procédé pour changer des fonctions réglables d'un véhicule

(30) Priorität: 23.03.1996 DE 19611552
(43) Veröffentlichungstag der Anmeldung: 24.09.1997
(73) Patentinhaber: Bayerische Motoren Werke Aktiengesellschaft, 80788 München (DE)
(72) Erfinder: Siefermann, Otmar, 82194 Gröbenzell (DE); Knöchel, Bernd, 82216 Maisach (DE)

(56) Entgegenhaltungen:
- EP-A- 0 505 336
- DE-A- 3 200 749
- DE-A- 3 609 688
- DE-A- 3 836 555
- DE-A- 3 842 414
- DE-A- 4 132 499
- DE-A- 4 203 621
- DE-A- 4 409 046
- DE-C- 3 514 438
- DE-C- 4 331 663

## Beschreibung

Die Erfindung bezieht sich auf ein Verfahren zum Verändern einstellbarer Funktionen eines Fahrzeugs. Darunter sind Funktion zu verstehen, die mehrere diskrete Einstellmöglichkeiten besitzen. Im einfachsten Fall sind dies zwei Möglichkeiten, nämlich ob eine Funktion vorhanden ist oder nicht. Beispiele hierfür sind die Ausgabe einer Warnung, wenn der Zündschlüssel nach dem Öffnen des Zündstromkreises im Zündschloß verbleibt, die Einschaltung einer Kindersicherung für die rückwärtigen Fahrzeugtüren, die automatische Verriegelung der Fahrzeugtüren über einer Fahrzeuggeschwindigkeit von z.B. 5km/h, die Entriegelung der Fahrertür auf einen Fernbedienungsbefehl hin anstelle der Entriegelung sämtlicher Fahrzeugtüren usw. Dazu gehören aber auch Funktionen, die eine Vielzahl von diskreten Einstellmöglichkeiten besitzen. Bei einer Anzeige in Schriftform kann dies die jeweilige Landessprache deutsch, englisch, italienisch, usw. sein. Bei einer Temperaturanzeige die Ausgabe in °C, °F oder die absolute Temperatur sein.

Bei einem derartigen Verfahren ist es üblich, die Funktionen beispielsweise im Rahmen eines Werkstattaufenthalts der Reihe nach aufzurufen und unter Zuhilfenahme eines Handbuchs die individuelle Einstellung der Funktion vorzunehmen. Dabei wird das für die Anzeige der Funktion zuständige Steuergerät angesprochen und individuell eingestellt. Mit zunehmender Vernetzung der Steuergeräte innerhalb eines Fahrzeugs ist damit kein Zugriff auf das für die Anzeige verantwortliche Steuergerät verbunden. Konkret bedeutet dies beispielsweise bei einer Temperaturanzeige nur den Zugriff auf das Anzeigemodul und nicht auf das für die Anzeige tatsächlich zuständige Steuergerät, bei dem es sich beispielsweise um das Motor-Steuergerät für die Anzeige der Kühlmittel-Temperatur oder das Klima-Steuergerät für die Anzeige der Außen- oder Innenraumtemperatur handelt. Besitzen die Steuergeräte unterschiedliche Einstellungen ihrer Anzeige-Einheit, ergibt sich der unbefriedigende Zustand, daß gleichartige Anzeige der Temperaturwerte mit verschiedenen Einheiten (°C und °F) zur Anzeige gebracht werden.

Im Unterschied zum Verfahren der eingangs genannten Art sind Verfahren bekannt, bei denen Funktionen individuell einstellbar sind, die eine nicht beschränkte Anzahl von Einstellmöglichkeiten beinhaltet. So ist es bekannt, einen Fahrzeugsitz oder eine Klimaanlage oder aber auch Innen- oder Außenrückblickspiegel den jeweiligen Bedürfnissen des Fahrzeugbenutzers anzupassen. Beispiele hierfür finden sich in der DE 38 17 495 C. Im Unterschied zu dem Verfahren, mit dem sich die Erfindung beschäftigt, gibt es dabei keine Grundeinstellung und auch nicht das Problem, das tatsächlich zuständige Steuergerät von dem die Anzeige ausführenden Steuergerät unterscheiden zu müssen. Die für die Funktionen zuständigen Steuergeräte werden dabei direkt angesprochen und nehmen dann die Einstellung der Bestandteile des Fahrzeugsitzes, der Klimaanlage oder der Spiegel selbsttätig in der gewünschten Weise vor.

Ein Verfahren gemäß dem Oberbegriff von Anspruch 1 ist aus DE3514438 A1 bekannt.

Der Erfindung liegt die Aufgabe zugrunde, ein Verfahren der eingangs genannten Art zu schaffen, das bedienerfreundlich und zweifelsfrei eine Einstellung der einstellbaren Funktionen in dem Umfang ermöglicht, wie dies durch den jeweiligen Fahrzeugbenutzer gewünscht wird.

Die Erfindung löst diese Aufgabe durch die kennzeichnenden Merkmale des Patentanspruchs 1.

Bei den durch die Erfindung angesprochenen Funktionen handelt es sich auch um Funktionen, die eine werksseitig vorgegebene Grundeinstellung besitzen und die nicht notwendigerweise in ihrer Einstellung verändert werden müssen. Nur die Funktionen werden tatsächlich den Wünschen des Fahrzeugbenutzers angepaßt, die der Fahrzeugbenutzer zu ändern beabsichtigt. Von der Erfindung mitumfaßt wird auch der Fall, bei dem keine der möglichen einstellbaren Funktionen gegenüber der Grundeinstellung geändert werden.

Durch die Verwendung einer Anzeige, auf der die Funktionen gruppenweise geordnet wiedergegeben werden, wird dem Fahrzeugbenutzer der mögliche Einstellungsumfang angezeigt. Die durch ihn vorgenommene Auswahl der zur ändernden Funktionen erfolgt dann ebenfalls unter optischer Kontrolle. Schließlich wird das Bündel änderbaren Funktionen selbsttätig und ohne Zugriff des Fahrzeugbenutzers auf die betreffenden Steuergeräte an diese Steuergeräte weitergegeben.

Weitere Möglichkeiten, die individuelle Funktionsauswahl zu erleichtern, sind Gegenstand der Patentansprüche 2 bis 5. Die menüartige Wiedergabe der einstellbaren Funktionen ist benutzerfreundlich, die Entnahme der Funktionen aus einem zentralen, beispielsweise beim Hersteller oder dem jeweiligen Fahrzeughändler vorhandenen Speicher verringert den Speicherbedarf im Fahrzeug.

Die Protokollierung der vorgenommenen Änderung der Funktionen ebenfalls im Speicher ermöglicht, den nächsten Einstellvorgang zu erleichtern. Es kann beispielsweise dann neben den Einstellmöglichkeiten auch die aktuelle Ist-Einstellung wiedergegeben werden.

Schließlich ergibt sich durch die Wiedergabe der jeweiligen Grundeinstellung einen zusätzliche Einstellhilfe, die allein oder in Verbindung der wiedergegebenen Ist-Einstellung die Benutzerfreundlichkeit erhöht.

Die in den Ansprüchen 6 und 7 beschriebenen Merkmale lassen es zu, wie bei den bekannten mit einer beliebigen Vielzahl von Einstellmöglichkeiten versehenen Funktionen eine individuelle Einstellung der Funktionen jeweils auf Wunsch des Fahrzeugbenutzers vorzunehmen. Dies kann analog dem bekannten Fall beispielsweise bei der Inbetriebnahme des Fahrzeugs durch Öffnen einer Fahrzeugtür oder dem Anlassen des Antriebsaggregats geschehen. Wie an sich bekannt, kann diese Veränderung der Einstellung selbsttätig und ohne besonderes Zutun des Fahrzeugbenutzers beispielsweise mit Hilfe einer drahtlosen Übertragungsstrecke vorgenommen werden. Der für den Fahrzeugbenutzer zugängliche Speicher kann beispielsweise in einem mit dem Zündschlüssel verbundenen Mikrochip vorgesehen sein.

Anhand der Zeichnung ist die Erfindung weiter erläutert. Sie zeigt anhand mehrere Diagramme den menügesteuerten Ablauf einer Änderung benutzerindividuell einstellbarer diskreter Funktionen.

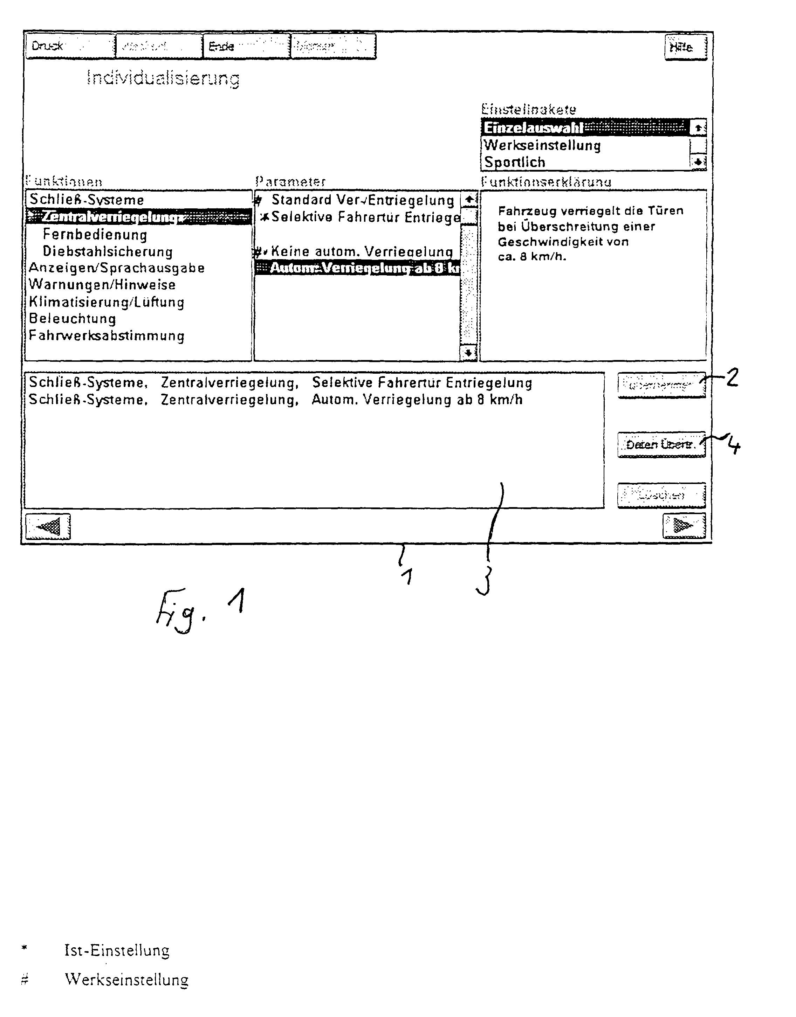

Das in Fig. 1 gezeigte Diagramm zeigt den Inhalt eines Bildschirms in üblicher Fenstertechnik. Dieser Bildschirm ist Teil einer Einstellvorrichtung, die in einer Werkstatt oder aber auch außerhalb einer Werkstatt in einem Laptop oder dgl. zu finden ist, der z.B. über die übliche Diagnosesteckdose am Fahrzeug angeschlossen ist. Auf dem Bildschirm 1 werden spaltenweise die individuell einstellbaren Funktionen, zu jeder ausgewählten Funktion die möglichen Parameter sowie eine Funktionserklärung wiedergegeben. Vorliegend sind als Funktionen die Schließ-Systeme mit den Unterfunktionen Zentralverriegelung, Fernbedienung und Diebstahlsicherung, als weitere Funktionen die Anzeigen/Sprachausgabe, weiter Warnungen/Hinweise, Klimatisierung/Lüftung, Beleuchtung und Fahrwerksabstimmung aufgeführt. Für die ausgewählte Unterfunktion Zentralverriegelung, optisch durch farblich invertierte Darstellung erkennbar, sind als Parameter als jeweils eine von zwei Möglichkeiten die Standardver-/entriegelung oder die selektive Fahrertürentriegelung bzw. eine automatische (Tür-) Verriegelung ab einer Fahrzeuggeschwindigkeit über 8 km/h oder keine derartige automatische Verriegelung vorgesehen.

Mit Hilfe eines Auswahlfeldes 2 "übernehmen", das z.B. über eine nicht dargestellte "Maus" ausgewählt und angesteuert wird, kann die jeweils gewünschte Unterfunktion ausgewählt werden. Wie aus dem PC-Bereich bekannt, kann zusätzlich zu der jeweils eingestellten Unterfunktion die Funktionserklärung aufscheinen, hier die Erläuterung der angewählten automatischen (Tür-)Verriegelung.

In einem weiteren Anzeigefeld 3 werden die ausgewählten Unterfunktionen dargestellt. Mit Hilfe eines Feldes 4 "Datenübertragung" werden die ausgewählten Unterfunktionen in die zuständigen Steuergeräte eingegeben und dort festgehalten. Das Feld 4 (Datenübertragung) dient dazu, den Bestätigungs-Schaltbefehl einzugeben. Sie sind dann solange gültig, bis erneut die dargestellte Individualisierung vorgenommen wird. Die die (Unter-) Funktionen ausführenden Steuergeräte werden über eine zentrale Steuereinheit bestimmt, in dem die im jeweiligen Fahrzeug vorhandenen Steuergeräte sowie die dort möglichen Einstellungen von Funktionen und Unterfunktionen abgespeichert sind. Das Steuergerät und damit der Speicher kann innerhalb des Fahrzeugs oder aber auch außerhalb des Fahrzeugs, wie dargestellt in einer Werkstätte vorhanden sein. Die auf einen Bestätigungs-Schaltbefehl (4) erforderlichen Einstelländerungen werden ebenfalls mit Hilfe des Steuergeräts bestimmt und in entsprechende Vorgaben an die jeweiligen Steuergeräte, hier beispielsweise ein zentrales Karosserieelektronik-Steuergerät umgesetzt.

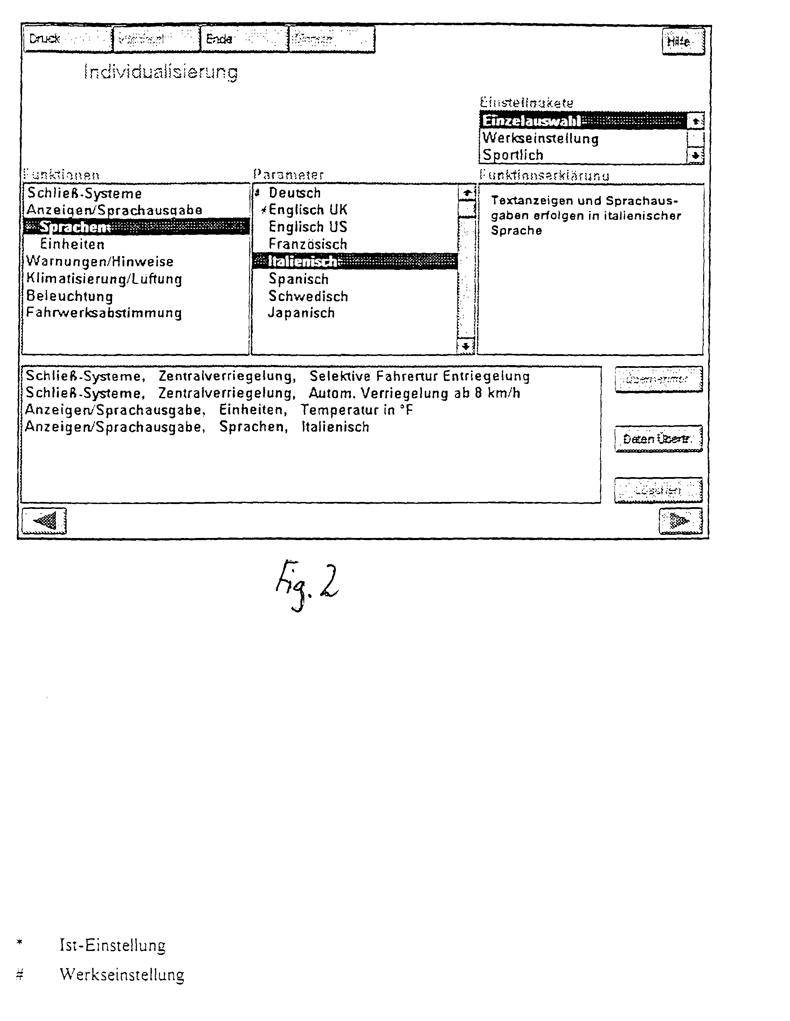

Mit dem Ausführungsbeispiel von Fig. 2 wird die Funktion Anzeigen/Sprachausgabe erläutert. Die Unter-Funktion Sprachen weist als Parameter eine Reihe von Landessprachen auf, zu denen die jeweilige Funktionserklärung wiedergegeben ist. Es ist damit möglich, sämtliche Textanzeigen und Sprachausgaben in hier italienischer Sprache vornehmen zu lassen. Im Anzeigefeld 3 sind die bis dahin ausgewählten Unter-Funktionen wiedergegeben. Erst wenn der Auswahlvorgang für sämtliche Funktionen und Unterfunktionen abgeschlossen ist, wird mit Hilfe des Feldes 4 die Umprogrammierung der zugehörigen und für die jeweilige Unterfunktion zuständigen Steuergeräte ausgelöst und vorgenommen.

Als weitere Besonderheit, der auch selbständige Bedeutung im Rahmen der vorliegenden Erfindung zukommt, ist unter der Überschrift Einstellpakete auch die Möglichkeit dargestellt, anstelle der beschriebenen Einzelauswahl von Unter-Funktionen auch eine Werkseinstellung oder aber auch die paketweise Auswahl mehrerer Funktionen vorzunehmen. Das Einstellpaket "sportlich" ermöglicht es ohne Auswahl und Kenntnis der einzelnen Unterfunktionen beispielsweise im Bereich der Fahrwerksabstimmung eine Reihe von Einstellungen auszuwählen, ohne hierfür die einzelne Funktion zu bestimmen. Aufgrund eines vorgegebenen inneren Zusammenhangs wird es dann ausgeschlossen, Funktionen zusammen auszuwählen, die in ihrer Gesamtheit dem Ziel, hier dem Fahrer einen sportlichen Eindruck zu vermitteln, zuwiderlaufen.

Auf dem Bildschirm ebenfalls erkennbar und durch Symbole Stern und Raute dargestellt ist auch die optische Anzeige der gewählten Ist-Einstellung und die Gegenüberstellung der vorgegebenen Werkseinstellung einzelner Funktionen. Damit wird der Einstellvorgang zusätzlich erleichtert.

## Patentansprüche

1. Verfahren zum Verändern einstellbarer Funktionen eines Fahrzeugs, bei dem
auf einen Auslösebefehl hin die beim jeweiligen Fahrzeug möglichen einstellbaren Funktionen aus einem Speicher entnommen und auf einer Anzeige symbolisch dargestellt werden,
über ein Eingabemedium daraus die gewünschten veränderbaren Funktionen ausgewählt werden, und
auf einen Bestätigungs-Schaltbefehl hin die die Funktionen ausführenden Steuergeräte umprogrammiert werden,
**dadurch gekennzeichnet, daß**
einer Ist-Einstellung einer über das Eingabe-medium ausgewählten Funktion eine vorgegebene Werkseinstellung derselben Funktion optisch gegenübergestellt wird, und daß
die Einstellung mehrerer veränderbarer Funktionen paketweise durch die Auswahl eines Einstellpakets erfolgt.

2. Verfahren nach Anspruch 1, **dadurch gekennzeichnet, daß** durch die Auswahl eines Einstellpakets die Werkseinstellung oder eine sportliche Einstellung der einstellbaren Funktionen des Fahrzeugs veranlaßt wird.

3. Verfahren nach einem der Ansprüche 1 bis 2, **dadurch gekennzeichnet, daß** die einstellbaren Funktionen menueartig dargestellt werden.

4. Verfahren nach einem der Ansprüche 1 bis 3, **dadurch gekennzeichnet, daß** die einstellbaren Funktionen aus einem zentralen, außerhalb des Fahrzeugs angeordneten Speicher entnommen werden.

5. Verfahren nach Anspruch 4, **dadurch gekennzeichnet, daß** mit der Eingabe des Schaltbefehls verbunden die Änderung des Speicherinhalts vorgenommen wird.

6. Verfahren nach einem der Ansprüche 1 bis 5, **dadurch gekennzeichnet, daß** durch Vergleich mit der Werkseinstellung ein Satz von Umprogrammierbefehlen für die Steuergeräte gewonnen wird, die entsprechend den gewünschten veränderbaren Funktionen umprogrammiert werden und daß dieser Satz in einem für den Fahrzeugbenutzer zugänglichen Speicher abgelegt wird.

7. Verfahren nach Anspruch 6, **dadurch gekennzeichnet, daß** der Speicherinhalt durch den Fahrzeugbenutzer eingebbar und den Steuergeräten zuführbar ist.

## Claims

1. A process for the changing of adjustable functions of a vehicle in which following a starting command the possible adjustable functions for the individual vehicle are taken from a store and shown symbolically on a display, the desired changeable functions are selected by means of an input medium and following a confirmatory switching command the control units carrying out the functions are reprogrammed,
**characterised in that** the actual adjustment of a function selected by the input medium is set opposite to the preset works adjustment of the same function and that the adjustment of several changeable functions occurs in a package fashion by the selection of one adjustment package.

2. A procedure according to claim 1 **characterised in that** by the selection of an adjustment package the works setting or a sporting setting of the adjustable functions of the vehicle can be set up.

3. A procedure according to one of the claims 1 and 2 **characterised in that** the adjustable functions are displayed in the form of a menu.

4. A procedure according to one of the claims 1 to 3 **characterised in that** the adjustable functions are taken from a central memory arranged outside the vehicle.

5. A procedure according to claim 4 **characterised in that** the change in the store content is undertaken by the input of the switching command.

6. A procedure according to one of the claims 1 to 5 **characterised in that** by comparison with the works setting a set of unprogrammable commands for the control units is obtained, which corresponding to the desired changeable functions are unprogrammed and that this set is stored in a store accessible for the vehicle user.

7. A procedure according to claim 6 **characterised in that** the store content can be input by the vehicle user and fed to the control units.

## Revendications

1. Procédé pour changer des fonctions variables d'un véhicule, selon lequel
- sur un ordre donné, les fonctions réglables existant dans le véhicule sont extraites d'une mémoire et figurées symboliquement sur un écran,
- par un moyen d'entrée, des fonctions variables sont sélectionnées,
- par un ordre de commutation-confirmation, les appareils de commande exécutant les fonctions sont programmés à nouveau ;
**caractérisé en ce qu'**
en face du réglage réel présenté sur l'écran d'une fonction sélectionnée par le moyen d'entrée, est affichée une valeur de consigne sélectionnée de cette même fonction, le réglage de plusieurs fonctions variables pouvait s'effectuer globalement par la sélection d'un paquet de réglage.

2. Procédé selon la revendication 1,
**caractérisé en ce qu'**
en sélectionnant un paquet de réglage, on peut donner le réglage d'usine ou un réglage sportif aux fonctions réglables du véhicule.

3. Procédé selon l'une quelconque des revendications 1 ou 2,
**caractérisé en ce que**
les fonctions réglables sont présentées sous forme de menu.

4. Procédé selon l'une quelconque des revendications 1 à 3,
**caractérisé en ce que**
les fonctions réglables sont extraites d'une mémoire centrale, extérieure au véhicule.

5. Procédé selon la revendication 4,
**caractérisé en ce que**
relié à l'entrée de l'ordre de commutation, on prévoit la modification du contenu de la mémoire.

6. Procédé selon l'une quelconque des revendications 1 à 5,
**caractérisé en ce qu'**
en comparaison avec le réglage d'usine, une série d'ordres de changement de programme est adressée aux appareils de commande qui sont à nouveau programmés en ce qui concerne les fonctions dont on a voulu changer le réglage et cette série de réglages est déposée dans une mémoire à laquelle peut accéder l'utilisateur du véhicule.

7. Procédé selon la revendication 6,
**caractérisé en ce que**
le contenu de la mémoire peut être entré par l'utilisateur du véhicule et transmis aux appareils de commande.
